Europäisches Patentamt

European Patent Office

Office européen des brevets

(19)

(11) **EP 1 168 184 A1**

(12) ## DEMANDE DE BREVET EUROPEEN

| | |
|---|---|
| (43) Date de publication:<br>**02.01.2002 Bulletin 2002/01** | (51) Int Cl.$^7$: **G06F 12/14** |

(21) Numéro de dépôt: **01112777.6**

(22) Date de dépôt: **28.05.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **28.06.2000 FR 0008283**

(71) Demandeur: **STMicroelectronics S.A.
92120 Montrouge (FR)**

(72) Inventeur: **Wuidart, Sylvie
83910 Pourrieres (FR)**

(74) Mandataire: **Marchand, André
OMNIPAT, 24 Place des Martyrs de la Résistance
13100 Aix-en-Provence (FR)**

(54) **Microprocesseur sécurisé comprenant un systeme d'attribution de droits a des librairies**

(57) L'invention concerne un microprocesseur sécurisé (MP) comportant un système d'attribution de droits (10) pour attribuer à des programmes exécutables par le microprocesseur des droits permanents d'accès à certaines zones (A-G) d'un plan mémoire (MEM1-MEM3) du microprocesseur, le système d'attribution de droits comprenant une table d'attribution de droits recevant sur une première entrée (E1) un code d'identification d'un programme ou d'un sous-programme et sur une deuxième entrée (E2) un code d'identification d'une zone mémoire désignée par une adresse courante (ADR) présente sur un bus d'adresse. Selon l'invention, le système d'attribution de droits est agencé pour conférer à un sous-programme partagé par au moins deux programmes des droits temporaires d'accès à certaines zones mémoire lorsque le sous-programme est appelé par l'un des programmes, et comprend à cet effet des moyens (DEC2, LT2) pour appliquer sur la première entrée de la table d'attribution de droits, pendant l'exécution du sous-programme, un code (CIP2) d'identification du programme ayant appelé le sous-programme.

**Fig.1**

## Description

La présente invention concerne les microprocesseurs et plus particulièrement les microprocesseurs sécurisés.

La présente invention concerne plus particulièrement un microprocesseur sécurisé comportant un système d'attribution de droits, pour attribuer à des programmes exécutables par le microprocesseur des droits permanents d'accès à certaines zones d'un plan mémoire du microprocesseur, le système d'attribution de droits comprenant une table d'attribution de droits recevant sur une première entrée un code d'identification d'un programme ou d'un sous-programme et sur une deuxième entrée un code d'identification d'une zone mémoire désignée par une adresse courante présente sur un bus d'adresse.

Les microprocesseurs sécurisés sont fréquemment utilisés dans les applications où il est nécessaire d'interdire l'accès à certaines données ou programmes confidentiels. Ainsi, par exemple, les cartes à puce sont généralement équipées de microprocesseurs sécurisés afin de protéger les zones mémoire qui comprennent des codes confidentiels ou des algorithmes de cryptographie.

De façon classique, la sécurisation d'un microprocesseur est assurée par un système de contrôle d'adresses vérifiant que le programme en cours d'exécution est habilité à adresser certaines zones mémoire pour des opérations de lecture, d'écriture, de saut ou de branchement. Un tel système comprend généralement une table d'attribution de droits qui reçoit sur une première entrée un code d'identification du programme en cours d'exécution et sur une seconde entrée un code d'identification de la zone mémoire en cours d'adressage, correspondant à l'adresse courante présente sur le bus d'adresse du microprocesseur. S'il est prévu dans la table que la zone mémoire en cours d'adressage est accessible au programne en cours d'exécution, la table délivre un signal d'autorisation. Dans le cas contraire, la table ne délivre pas le signal d'autorisation et un signal de violation d'adresse est émis.

Un tel système de contrôle d'adresses permet de faire cohabiter de façon sécurisée divers programmes dans le plan mémoire d'un microprocesseur, en attribuant des droits différents à chacun des programmes. Ces divers programmes correspondent généralement à des applications différentes du microprocesseur, prévues par le constructeur.

La sécurisation d'un microprocesseur a toutefois un effet négatif sur l'organisation du plan mémoire en ce qu'elle cloisonne le plan mémoire en diverses parties "étanches" les unes relativement aux autres, chaque partie étant réservée à une application. Or, il est fréquent que des programmes prévus pour des applications différentes comprennent des étapes de calcul similaires qui pourraient être centralisées dans une zone commune en tant que "librairie", une librairie désignant dans le langage de l'homme de l'art un ou plusieurs sous-programmes partagés par plusieurs programmes.

Cette méthode classique de centralisation sous forme de librairie de parties de programme communes à plusieurs programmes est généralement prohibée avec les microprocesseurs sécurisés en raison des problèmes de sécurité qu'elle entraîne. A titre d'exemple, supposons qu'un programme PGA bénéficie de droits pour accéder à une zone "X" du plan mémoire, et qu'un programme PGB bénéficie de droits pour accéder à une zone "Y" distincte de "X". La prévision d'un sous-programme partagé par les programmes PGA et PGB entraîne la question de savoir quels sont les droits qui doivent être conférés au sous-programme. Si le sous-programme doit pouvoir lire ou écrire des données dans la zone "X" lorsqu'il est appelé par le programme PGA et lire ou écrire dans la zone "Y" lorsqu'il est appelé par le programme PGB, il faut conférer au sous-programme les droits cumulés des programmes PGA et PGB, c'est-à-dire des droits sur la zone "X" et sur la zone "Y". Toutefois, le programme PGB ou un programme frauduleux chargé à l'emplacement du programme PGB pourrait utiliser le sous-programme pour accéder à la zone "X" réservée au programme PGA, et réciproquement. La prévision d'un sous-programme partagé par deux programmes ayant des droits d'accès différents au plan mémoire constitue donc une brèche dans le cloisonnement du plan mémoire.

La présente invention vise à pallier cet inconvénient.

Le document US 5,452,431 divulgue en relation avec sa figure 1 un microprocesseur dont le plan mémoire comprend une zone répertoire [ZR], une zone publique [ZP] et des zones application $[ZA_1\text{-}ZA_n]$. La zone répertoire comprend une table définissant le cloisonnement du plan mémoire tandis que la zone publique est accessible à tous les programmes application. Le contrôle de l'accès au plan mémoire est assuré par un circuit de contrôle d'adresse [14] comprenant une porte logique [32] délivrant un signal d'interdiction de lecture, écriture ou effacement lorsqu'un programme application cherche à effectuer l'une de ces opérations dans une zone qui ne lui est pas dédiée.

Le document US 3,803,559 divulgue en relation avec sa figure 1 un microprocesseur dont le plan mémoire [10] est cloisonné en une zone de contrôle [5], une zone sous-programme [6], une zone de données [7] et des zones application [8A-8N]. Un système assurant le cloisonnement du plan mémoire est représenté en figure 3 de ce document comprend deux paires de registres [31, 32 et 33, 34] et quatre comparateurs d'adresse [350-353]. Les deux paires de registres déterminent deux segments de la mémoire auxquels un programme en cours d'exécution peut accéder en lecture ou écriture ou en exécution d'instruction. Le premier segment est celui de la zone mémoire dans lequel se trouve le programme en cours d'exécution tandis que le second segment peut couvrir toute autre zone mémoire.

La présente invention vise un moyen permettant de prévoir des sous-programmes partagés par plusieurs programmes sans porter atteinte à l'intégrité des droits conférés à chacun des programmes.

Cet objectif est atteint par la prévision d'un microprocesseur du type mentionné ci-dessus, dans lequel le système d'attribution de droits est agencé pour conférer à un sous-programme partagé par au moins deux programmes des droits temporaires d'accès à certaines zones mémoire lorsque le sous-programme est appelé par l'un des programmes, et comprend à cet effet des moyens pour appliquer sur la première entrée de la table d'attribution de droits, pendant l'exécution du sous-programme, un code d'identification du programme ayant appelé le sous-programme.

Selon un mode de réalisation, le système d'attribution de droits comprend des moyens pour conférer temporairement à un sous-programme les droits du programme appelant.

Selon un mode de réalisation, le système d'attribution de droits comprend des moyens pour conférer en outre à un sous-programme des droits permanents indépendants de ceux du programme appelant.

Selon un mode de réalisation, le système d'attribution de droits comprend des moyens pour appliquer simultanément sur la première entrée de la table d'attribution de droits, pendant l'exécution d'un sous-programme, un code d'identification du sous-programme en cours d'exécution et un code d'identification du programme ayant appelé le sous programme.

Selon un mode de réalisation, des bits du code d'identification du sous-programme en cours d'exécution et des bits du code d'identification du programme ayant appelé le sous programme sont combinés par une fonction logique avant d'être appliqués sur la première entrée de la table d'attribution de droits.

Selon un mode de réalisation, le système d'attribution de droits comprend un premier verrou pour stocker pendant l'exécution d'une instruction le code d'identification du programme ou du sous-programme en cours d'exécution, et un second verrou ayant son entrée reliée à la sortie du premier verrou, agencé pour stocker le code d'identification d'un programme en cours d'exécution lorsque le microprocesseur bascule dans un sous-programme, pour former le code d'identification du programme ayant appelé le sous-programme, le second verrou étant remis à zéro lorsque le microprocesseur quitte le sous-programme.

Selon un mode de réalisation, le chargement et la remise à zéro du deuxième verrou sont contrôlés par un décodeur d'adresse recevant en entrée les adresses courantes circulant sur le bus d'adresse, le décodeur d'adresse étant agencé pour appliquer un signal de chargement au second verrou lorsque l'adresse de la première instruction d'un sous-programme est détectée, et délivrer au second verrou un signal de remise à zéro lorsque l'adresse de la dernière instruction du sous-programme est détectée.

Selon un mode de réalisation, les codes d'identification des zones mémoire désignées par les adresses courantes et les codes d'identification des programmes et sous-programmes en cours d'exécution sont délivrés par un décodeur d'adresse recevant en entrée les adresses courantes circulant sur le bus d'adresse.

Selon un mode de réalisation, le système d'attribution de droits émet un signal de violation quand une adresse présente sur le bus d'adresse ne correspond pas aux droits attribués de façon permanente ou temporaire au programme ou sous-programme en cours d'exécution.

Selon un mode de réalisation, le signal de violation d'adresse est traité par un décodeur d'interruption pour envoyer le microprocesseur dans un sous-programme de traitement des violations d'adresse.

Ces objets, caractéristiques et avantages ainsi que d'autres de la présente invention seront exposés plus en détail dans la description suivante d'un exemple de réalisation d'un microprocesseur selon l'invention, faite à titre non limitatif en relation avec les figures jointes parmi lesquelles :

- la figure 1 représente sous forme de bloc un microprocesseur comprenant un système de gestion de droits selon l'invention,
- la figure 2 représente le plan mémoire du microprocesseur et illustre un exemple d'application du système de gestion de droits selon l'invention,
- la figure 3 représente un exemple de réalisation d'une table d'attribution de droits en relation avec l'exemple illustré en figure 2, et
- les figures 4 et 5 représentent schématiquement deux autres exemples de réalisation d'une table d'attribution de droits selon l'invention.

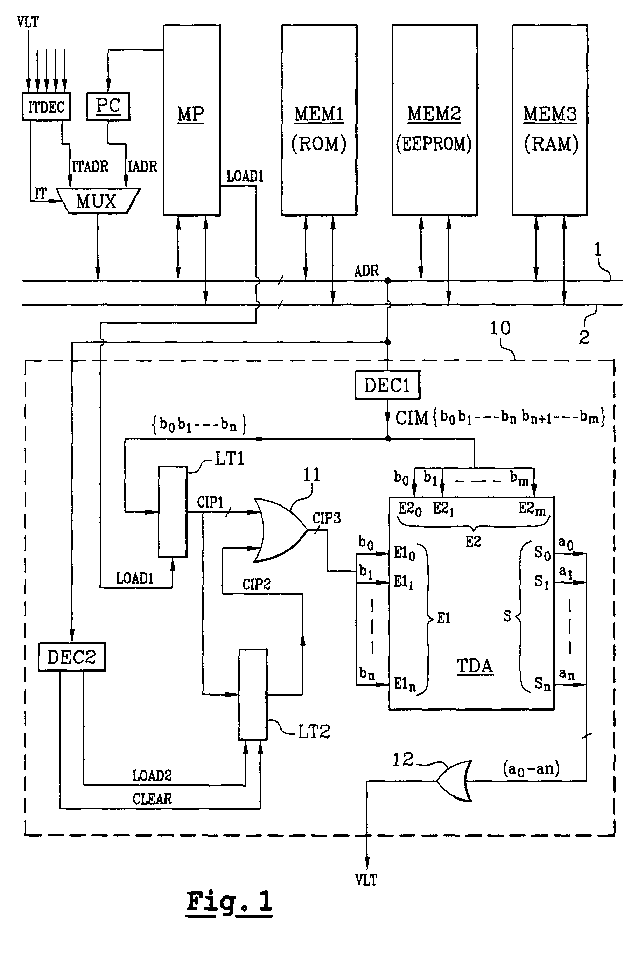

La figure 1 représente sous forme de bloc un microprocesseur MP pourvu d'une mémoire morte MEM1 (ROM), d'une mémoire effaçable et programmable électriquement MEM2 (EEPROM) et d'une mémoire vive MEM3 (RAM). Ces diverses mémoires sont reliées au microprocesseur par l'intermédiaire d'un bus d'adresse 1 et d'un bus de données 2, et forment ensemble le plan mémoire du microprocesseur.

Selon l'invention, le microprocesseur MP comprend un système d'attribution de droits 10 qui confère à des sous-programmes des droits d'accès variables en fonction du programme appelant.

Le système 10 comprend deux décodeurs d'adresse DEC1, DEC2 connectés en entrée au bus d'adresse pour recevoir les adresses courantes ADR circulant sur le bus d'adresse. Le décodeur DEC1 délivre un code CIM d'identification de zones mémoire du type :

$$CIM = b0\ b1...bn\ bn+1...bm$$

dans lequel chaque bit est affecté à l'identification d'une zone mémoire prédéterminée, un seul bit à la fois pouvant être à 1 pendant que les autres sont à 0.

Dans ce qui suit, on considérera que les bits b0 à bn sont affectés à la désignation de zones mémoire comprenant des programmes tandis que les bits bn+1 à bm sont affectés à la désignation de zones mémoire comprenant des données. Les zones programme sont par exemple localisées dans la mémoire MEM1 (ROM) tandis que les zones de données sont localisées dans les mémoires MEM2 et MEM3.

Les bits b0-bn du code CIM sont appliqués à l'entrée d'un verrou LT1 ("latch") piloté par un signal de chargement LOAD1 délivré par le microprocesseur MP. Lorsque le signal LOAD1 est appliqué au verrou LT1, la sortie du verrou recopie l'entrée du verrou et délivre un code CIP1 d'identification de zones programme.

Le code CIP1 est appliqué à l'entrée d'un second verrou LT2 piloté par un signal de chargement LOAD2 et un signal RST de remise à zéro délivrés par le décodeur DEC2. Lorsque le signal LQAD2 est appliqué au verrou LT2, la sortie du verrou délivre un code CIP2 qui recopie le code CPI1 présent en entrée.

Les codes CIP1 et CIP2 sont combinés pour former un code résultant CIP3 qui est appliqué sur une entrée E1 d'une table d'attribution de droits TDA, recevant sur une entrée E2 le code CIM délivré par le décodeur DEC1. Dans le présent mode de réalisation, la combinaison des codes CIP1, CIP2 est assurée par une porte OU 11 dont la sortie délivre un code CIP3 égal à la somme logique bit à bit des codes CIP1 et CIP2.

La table d'attribution TDA comporte une sortie OUT constituée par des sorties élémentaires $S_0$-$S_n$, chaque sortie $S_0$-$S_n$ correspondant à une entrée élémentaire de même rang $E1_1$... $E1_n$ de l'entrée E1, recevant l'un des bits du code CIP3. Les sorties $S_0$-$S_n$ délivrent des droits d'accès sous forme de bits d'autorisation $a_0$ à $a_n$. Un bit d'autorisation $a_i$ est égal à 1 lorsque l'entrée correspondante $EI_i$ reçoit un bit $b_i$ égal à 1 et lorsque le code CIM appliqué sur l'entrée E2 comprend un bit $b_j$ égal à 1 formant avec le bit $b_i$ une combinaison autorisée $\{b_i, b_j\}$ de bits à 1. Les combinaisons autorisées $\{b_i, b_j\}$ sont enregistrées dans la table une fois pour toutes et définissent des droits permanents.

Le signal LOAD1 de chargement du verrou LT1 est délivré par le microprocesseur MP quand celui-ci lit ou est sur le point de lire une instruction dans la mémoire MEM1 (cycle de lecture ou cycle "fetch" du microprocesseur). A cet instant, l'adresse ADR présente sur le bus d'adresse est l'adresse IADR de l'instruction, délivrée par le compteur ordinal PC du microprocesseur. Ainsi, le code CIM délivré par le décodeur DEC1 comprend un bit $b_i$ à 1 qui désigne la zone mémoire comprenant cette instruction. Ce bit $b_i$ se retrouve dans le code CIP1 enregistré par le verrou LT1, et sur l'entrée E1 de la table TDA.

Par ailleurs, le signal LOAD2 est délivré par le décodeur DEC2 lorsque celui-ci détecte sur le bus 1 l'adresse ADRin de la première instruction d'un sous-programme partagé, et le signal RST est délivré par le décodeur DEC2 lorsque celui-ci détecte sur le bus d'adresse l'adresse ADRout de la dernière instruction du sous-programme. Les adresses ADRin, ADRout sont prédéterminées et représentent l'adresse d'entrée et l'adresse de sortie du sous-programme considéré. Si plusieurs sous-programmes sont partagés par des programmes, le décodeur DEC2 est agencé pour détecter les adresses d'entrée et de sortie de chacun des sous-programmes, et émettre le signal LOAD2 ou le signal RST quand l'une de ces adresses est détectée.

Le système 10 selon l'invention fonctionne de façon classique pendant l'exécution d'un programme, car la sortie du verrou LT2 est à 0, le code CIP3 appliqué à la table TDA étant ainsi égal au code CIP1. Pendant l'exécution du programme, après le chargement de chaque nouvelle instruction, il est fréquent que l'adresse courante ADR sur le bus d'adresse change et désigne une autre zone de la mémoire, par exemple lorsque l'instruction en cours d'exécution est une instruction de lecture ou d'écriture dans le plan mémoire. Dans ce cas, le code CIM délivré par le décodeur DEC1 change de valeur et présente un bit $b_j$ à 1 différent, qui désigne la zone mémoire correspondante. Si la combinaison $\{b_i, b_j\}$ appliquée à la table TDA est autorisée, la sortie $S_i$ de la table reste à 1. Sinon, la sortie $S_i$ passe à 0 et le signal de violation VLT passe à 1. Après l'exécution de l'instruction, l'adresse IADR de la nouvelle instruction est émise sur le bus d'adresse et entraîne un autre changement du code CIM et la vérification automatique dans la table TDA d'une autre combinaison $\{b_i, b_j\}$ de bits de code. Si cette adresse correspond à un saut dans un sous-programme, une autorisation correspondante doit être prévue dans la table TDA.

Le fonctionnement du système 10 selon l'invention diffère d'un système de contrôle d'adresse classique lorsque le programme comprend une instruction de saut ou de branchement vers un sous-programme partagé. A l'instant où l'adresse ADRin de la première instruction du sous-programme se trouve sur le bus d'adresse, le décodeur DEC2 délivre le signal LOAD2 et le verrou LT2 enregistre le code CIP1 avant que le microprocesseur ne bascule dans le sous-programme. Ainsi, lorsque le microprocesseur a basculé dans le sous-programme, le code CIP1 à la sortie du verrou LT1 désigne la zone mémoire contenant le sous-programme tandis que le code CIP2 à la sortie du verrou LT2 désigne la zone mémoire dans laquelle se trouve le programme ayant appelé le sous-programme. Le code CIP1 identifie ainsi le sous-programme en cours d'exécution et le code CIP2 identifie le programme ayant appelé le sous-programme.

Les codes CIP1, CIP2 étant combinés ici dans la porte OU 11, la table TDA reçoit sur son entrée E1 un code CIP3 qui comprend deux bits $b_i$ à 1 au lieu d'un seul, le premier correspondant au sous-programme en cours d'exécution et le second au programme ayant appelé le sous-programme. L'application à la table TDA du bit $b_i$ correspondant au programme appelant autorise des combinaisons de bits $\{b_i, b_j\}$ avec les bits du code CIM qui sont spécifiques au programme appelant. Le sous-programme appelé "hérite" ainsi, pendant son exécution, des droits conférés au programme appelant. Ces droits transférés au sous-programme s'additionnent aux droits permanents qui lui sont attribués, ces droits pouvant toutefois être choisis nuls.

Le système 10 selon l'invention réalise ainsi une attribution dynamique de droits à un sous-programme appelé, qui cesse lorsque le microprocesseur retourne dans le programme appelant, au moment où le décodeur DEC2 détecte l'adresse de sortie ADRout du sous-programme et remet le code CIP2 à zéro.

En pratique, le signal VLT qui est émis lorsqu'une violation d'un droit permanent ou temporaire se produit, peut être utilisé de diverses manières pour empêcher l'accès à la zone mémoire interdite. Comme représenté en figure 1, le signal VLT est par exemple appliqué sur une entrée d'un décodeur d'interruption ITDEC dont la sortie délivre l'adresse ITADR d'un sous-programme de traitement des cas de violation d'adresse. L'adresse ITADR est appliquée sur une entrée d'un multiplexeur MUX qui reçoit sur une autre entrée l'adresse IADR de l'instruction suivante, délivrée par le compteur ordinal PC. Le multiplexeur est piloté par un signal IT délivré par le décodeur ITDEC et délivre au bus d'adresse l'adresse ITADR au lieu de l'adresse IADR lorsque le signal IT est émis. Dans une variante de réalisation, le signal VLT est utilisé pour forcer à 0 le signal de remise à zéro du microprocesseur (RESET), de manière à désactiver ce dernier. Dans une autre variante, le signal VLT est utilisé pour générer une interruption non masquable.

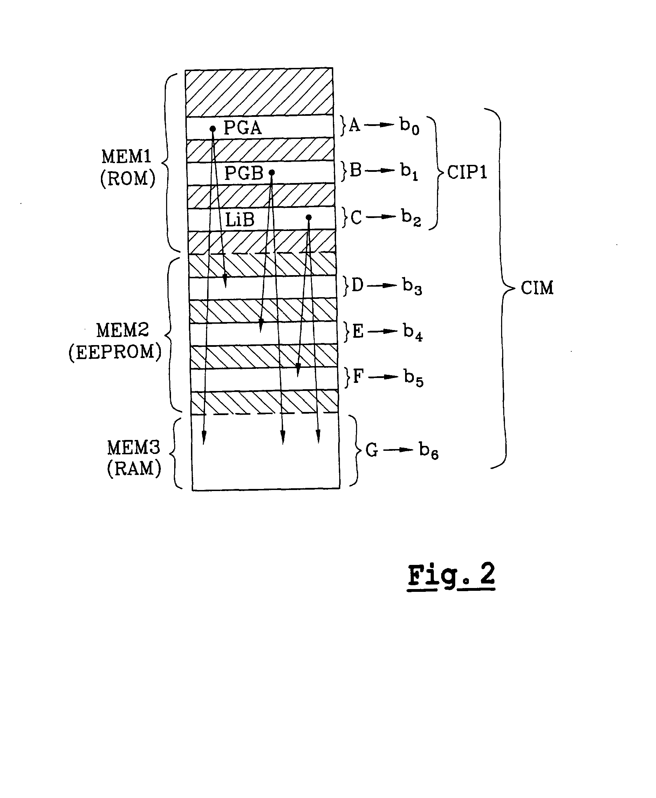

Le fonctionnement du système 10 selon l'invention sera mieux compris à la lumière d'un exemple simple de mise en oeuvre qui est illustré en figure 2.

La figure 2 représente le plan mémoire du microprocesseur dans lequel certaines zones mémoire sont réservées à des applications, les autres étant strictement interdites et représentées hachurées. On distingue ainsi une zone A dans laquelle est enregistré un programme PGA, une zone B dans laquelle est enregistré un programme PGB, une zone C dans laquelle est enregistré un sous-programme LIB (librairie) partagé par les programmes PGA et PGB, une zone de données D réservée en écriture et en lecture au programme PGA, une zone de données E réservée en écriture et en lecture au programme PGB, une zone de données F réservée en écriture et en lecture au sous-programme LIB, et une zone G disponible en écriture et lecture aux trois programmes PGA, PGB, LIB. Les zones A, B, C sont par exemple agencées dans la mémoire MEM1 (ROM), les zones D, E, F agencées dans la mémoire MEM2 (EEPROM) et la zone G dans la mémoire MEM3 (RAM). Comme représenté, le code CIM d'identification des zones mémoire comprend ainsi sept bits de code b0 à b6 affectés respectivement à l'identification des zones A à G, et les codes CIP1, CIP2 d'identification des zones programme comprennent les bits b0, b1 et b2.

Dans cet exemple, on souhaite que le sous-programme LIB bénéficie des droits du programme PGA ou PGB qui l'appelle, de manière que le programme PGA puisse demander au sous-programme d'enregistrer dans la zone D des résultats d'étapes de calcul et que le programme PGB puisse demander au sous-programme d'enregistrer dans la zone E de tels résultats, les zones F et G étant utilisables par le sous-programme pour stocker des résultats temporaires, avec des droits permanents d'accès.

Dans l'art antérieur, la solution pour atteindre cet objectif pourrait consister dans le fait d'attribuer au sous-programme des droits permanents sur les zones D et E, mais cela constituerait une brèche dans le cloisonnement du plan mémoire.

Selon l'invention, les droits sur l'une des zones D et E sont attribués temporairement au sous-programme en fonction du programme appelant, au moment où le microprocesseur entre dans le sous-programme.

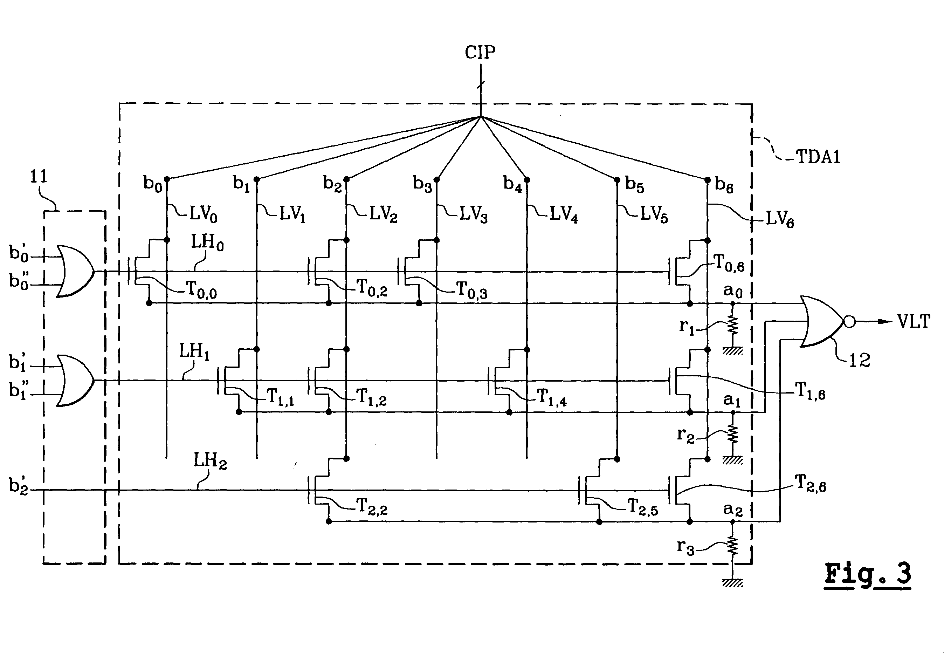

Pour fixer les idées, la figure 3 représente un exemple de réalisation d'une table TDA1 permettant de générer une telle attribution de droits temporaires. La table TDA1 comprend trois lignes horizontales LH0 à LH2, sept lignes verticales LV0 à LV6 et trois lignes de sortie LS0 à LS2. Afin de faciliter la compréhension de ce qui suit, les bits du code CIP1 d'identification du programme en cours d'exécution sont référencés b0' à b2' et les bits du code CIP2 d'identification du programme appelant le sous-programme sont référencés b0'' à b2''.

Les lignes verticales LV0 à LV6 reçoivent respectivement les bits b0 à b6 du code CIM. La ligne LH0 reçoit le résultat de l'addition logique des bits b0' et b0''. La ligne LH1 reçoit le résultat de l'addition logique des bits b1' et b1''. La ligne LH2 reçoit le bit b2' seulement, car le bit b2'' est toujours à 0. Les lignes LS0 à LS2 délivrent respectivement des bits d'autorisation a0 à a2 qui sont combinés dans la porte 12 pour former le signal VLT.

Les droits permanents d'accès au plan mémoire à attribuer aux programmes PGA, PGB et au sous-programme LIB sont matérialisés par des transistors MOS Ti,j agencés aux croisements des lignes horizontales LHi et des lignes verticales LVj. Un transistor Ti,j agencé au croisement de deux lignes LHi, LVj est connecté par sa grille à la ligne LHi, par son drain à la ligne LVj et par sa source à la ligne de sortie LSi. Ici, on distingue ainsi des transistors aux croisements de la ligne LH0 avec les lignes LV0, LV2, LV3 et LV6, qui déterminent les droits permanents du programme PGA sur sa propre zone mémoire A, sur la zone C contenant le sous-programme LIB et sur les zones D et G (fig. 2). On distingue également des transistors au croisement de la ligne LH1 avec les lignes LV1, LV2, LV4 et LV6, qui déterminent les droits permanents du programme PGB, et des transistors au croisement de la ligne LH2 et des lignes LV2, LV5 et LV6, qui déterminent les droits permanents du sous-programme LIB sur sa propre zone mémoire C et sur les zones F et G.

Le fonctionnement de la table TDA1 est en soi classique en ce qui concerne l'attribution des droits permanents aux programmes PGA, PGB, LIB. Chaque ligne de sortie LS0 à LS1 est maintenue à 0 par une résistance, respectivement r1 à r3, et est portée à 1 lorsqu'un transistor Ti,j connecté par sa source à la ligne de sortie reçoit un bit à 1 sur sa grille et sur son drain, le "1" logique correspondant à la tension d'alimentation du système.

L'attribution des droits temporaires et permanents du sous-programme intervient lorsque le microprocesseur bascule dans le sous-programme. A cet instant, le bit b2' du code CIP1 est à 1, ce qui active les droits du sous-programme. De plus, le bit b0" ou le bit b1" du code CIP2 est également à 1 selon que le sous-programme a été appelée par le programme PGA ou PGB, ce qui maintient les droits du programme PGA ou PCB au bénéfice du sous-programme.

Bien entendu, la table TDA1 est en elle-même susceptible de diverses variantes de réalisation, notamment en logique inversée, qui sont à la portée de l'homme de l'art.

Par ailleurs, bien que l'on ait proposé dans ce qui précède de transférer à un sous-programme les droits du programme appelant, diverses autres variantes de la présente invention peuvent être prévues en ce qui concerne l'étendue des droits temporaires attribués à des sous-programmes.

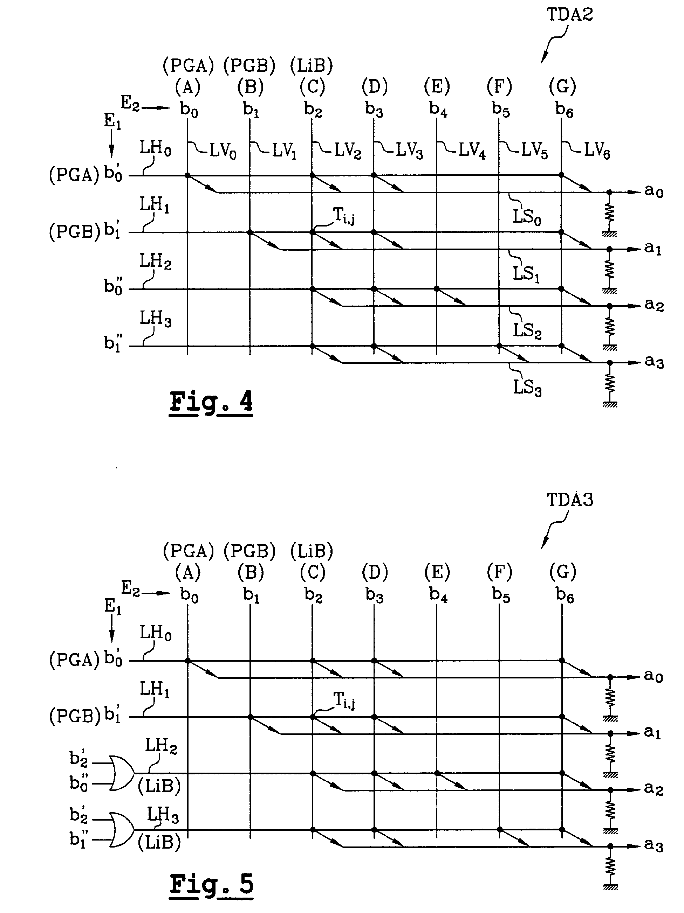

A titre d'exemple, la figure 4 représente une table TDA2 ayant les mêmes lignes verticales LV0 à LV6 que la table TDA1 mais comprenant quatre lignes horizontales LH0 à LH3 recevant respectivement les bits b0', b1', b0" et b1" sans combinaison logique de ces bits. Les transistors Ti,j aux intersections des lignes sont représentés schématiquement par des points reliés par des flèches aux lignes de sortie, ici quatre lignes LS0 à LS3. Aucune ligne horizontale n'est prévue ici pour attribuer des droits permanents au sous-programme LIB, qui sont donc nuls dans cet exemple mais pourraient également être prévus non nuls.

La table TDA2 diffère de la table TDA1 en ce que les lignes LH0 et LH1 définissent les droits permanents des programmes PGA et PGB tandis que les lignes LH2, LH3, qui ne sont activées que par les bits b0" et b1", définissent les droits temporaires du sous-programme LIB. Les lignes LH2, LH3 étant distinctes et indépendantes des lignes LH0, LH1, il est possible d'attribuer au sous-programme, en fonction du programme appelant, des droits temporaires distincts des droits permanents du programme appelant. Ainsi, dans l'exemple représenté, les transistors Ti,j sont agencés de manière que soient attribués :

- au programme PGA, des droits sur sa propre zone programme A, des droits sur la zone programme C du sous-programme LIB et des droits sur la zone G,
- au programme PGB, des droits sur sa propre zone programme B, des droits sur la zone programme C du sous-programme LIB et des droits sur la zone G,
- au sous-programme LIB, lorsqu'il est appelé par le programme PGA, des droits sur sa propre zone programme C et des droits sur les zones E et G,
- au sous-programme LIB, lorsqu'il est appelé par le programme PGB, des droits sur sa propre zone programme C et des droits sur les zones F et G,

En définitive, la prévision de deux lignes particulières LH2, LH3 recevant les bits b0", b1" enregistrés par le verrou LT2 au moment du basculement dans le sous-programme, permet d'attribuer au sous-programme des droits particuliers qui dépendent du programme appelant tout en étant indépendant des droits de ce dernier.

Par ailleurs, il apparaît dans cet exemple que les droits attribués au sous-programme LIB sont également attribués à tout autre sous-programme susceptible d'être appelé par les programmes PGA et PGB, puisque l'attribution de droits ne repose que sur les bits b0", b1" du code CIP2.

La figure 5 représente une table TDA3 qui est similaire à la table TDA2 mais dans laquelle la ligne LH2 reçoit le bit b0" combiné au bit b2' au moyen d'une porte ET, et la ligne LH3 reçoit le bit b1" combiné au bit b2' au moyen d'une autre porte ET. Dans ce cas, la ligne LH2 ou la ligne LH3 ne peut être activée qu'à la double condition que le bit b2' soit égal à 1 et que le bit b0" ou b1" soit également à 1. Ainsi, le transfert temporaire de droits est réservé ici au sous-programme LIB à l'exclusion de tout autre sous-programme éventuel.

La présente invention est bien entendu susceptible de diverses autres variantes et modes de réalisation basés sur le principe selon l'invention d'un transfert de droits temporaires à des sous-programmes par mémorisation de l'identité du programme appelant. Notamment, des transferts de droits en cascades pourraient être prévus pour des sous-programmes de deuxième niveau appelés par des sous-programmes de premier niveau qui sont eux-mêmes appelés par des programmes principaux.

Enfin, bien que les modes de réalisation de tables d'attribution de droits qui sont décrits plus haut ont été présentés sous la forme de circuits matriciels à transistors, dans le souci de faciliter la compréhension de l'invention, il doit être noté qu'une table d'attribution de droits selon l'invention est susceptible en pratique de revêtir diverses autres formes. Notamment, une telle table est réalisable sous la forme d'un circuit à logique booléenne généré automatiquement par un compilateur de langage VHDL, cette méthode de génération automatique de circuits logiques à partir d'une fonction écrite en langage de haut niveau ayant connu un important essor ces dernières années.

**Revendications**

1. Microprocesseur sécurisé (MP) comportant un système d'attribution de droits (10) pour attribuer à des programmes exécutables par le microprocesseur des droits permanents d'accès à certaines zones (A-G) d'un plan mémoire (MEM1-MEM3) du microprocesseur, le système d'attribution de droits comprenant une table (TDA, TDA1, TAD2, TDA3) d'attribution de droits recevant sur une première entrée (E1) un code (CIP1, b0-bn) d'identification d'un programme ou d'un sous-programme et sur une deuxième entrée (E2) un code (CIM, b0-bm) d'identification d'une zone mémoire désignée par une adresse courante (ADR) présente sur un bus d'adresse,
   **caractérisé en ce que** le système d'attribution de droits est agencé pour conférer à un sous-programme (LIB) partagé par au moins deux programmes (PGA, PGB) des droits temporaires d'accès à certaines zones mémoire lorsque le sous-programme est appelé par l'un des programmes, et comprend à cet effet des moyens (DEC2, LT2) pour appliquer sur la première entrée de la table d'attribution de droits, pendant l'exécution du sous-programme, un code (CIP2) d'identification du programme ayant appelé le sous-programme.

2. Microprocesseur selon la revendication 1, **caractérisé en ce que** le système d'attribution de droits (10) comprend des moyens (TDA, TDA1, 11) pour conférer temporairement à un sous-programme (LIB) les droits du programme appelant (PGA, PGB).

3. Microprocesseur selon l'une des revendications 1 et 2, **caractérisé en ce que** le système d'attribution de droits comprend des moyens (TDA, TDA1, 11) pour conférer en outre à un sous-programme des droits permanents (F, G) indépendants de ceux du programme appelant.

4. Microprocesseur selon l'une des revendications 1 à 3, **caractérisé en ce que** le système d'attribution de droits comprend des moyens pour appliquer simultanément sur la première entrée (E1) de la table d'attribution de droits, pendant l'exécution d'un sous-programme, un code (CIP1) d'identification du sous-programme en cours d'exécution et un code (CIP2) d'identification du programme ayant appelé le sous programme.

5. Microprocesseur selon l'une des revendications 1 à 4, **caractérisé en ce que** ce que des bits (b0', b1') du code (CIP2) d'identification du sous-programme en cours d'exécution et des bits (b0", b1") du code d'identification du programme ayant appelé le sous programme sont combinés par une fonction logique (11) avant d'être appliqués sur la première entrée (E1) de la table d'attribution de droits (TDA, TDA1, TDA3).

6. Microprocesseur selon l'une des revendications 1 à 5, **caractérisé en ce que** le système d'attribution de droits comprend :

   - un premier verrou (LT1) pour stocker (LOAD1) pendant l'exécution d'une instruction le code (CIP1) d'identification du programme ou du sous-programme en cours d'exécution, et
   - un second verrou (LT2) ayant son entrée reliée à la sortie du premier verrou, agencé pour stocker (LQAD2) le code (CIP1) d'identification d'un programme en cours d'exécution lorsque le microprocesseur bascule dans un sous-programme, pour former le code (CIP2) d'identification du programme ayant appelé le sous-programme, le second verrou étant remis à zéro (RST) lorsque le microprocesseur quitte le sous-programme.

7. Microprocesseur selon la revendication 6, **caractérisé en ce que** le chargement et la remise à zéro du deuxième verrou (LT2) sont contrôlés par un décodeur d'adresse (DEC2) recevant en entrée les adresses courantes (ADR) circulant sur le bus d'adresse, le décodeur d'adresse étant agencé pour appliquer un signal de chargement (LQAD2) au second verrou lorsque l'adresse (ADRin) de la première instruction d'un sous-programme est détectée, et délivrer au second verrou un signal de remise à zéro (RST) lorsque l'adresse (ADRout) de la dernière instruction du sous-programme est détectée.

8. Microprocesseur selon l'une des revendications 1 à 7, **caractérisé en ce que** les codes (CIM) d'identification des zones mémoire désignées par les adresses courantes et les codes (CIP1) d'identification des programmes et sous-programmes en cours d'exécution sont délivrés par un décodeur d'adresse (DEC1) recevant en entrée les adresses courantes circulant sur le bus d'adresse.

9. Microprocesseur selon l'une des revendications 1 à 8, **caractérisé en ce que** le système d'attribution de droits (10) émet un signal de violation (VLT) quand une adresse présente sur le bus d'adresse ne correspond pas aux droits attribués de façon permanente ou temporaire au programme ou sous-programme en cours d'exécution.

10. Microprocesseur selon la revendication 9, **caractérisé en ce que** le signal de violation d'adresse (VLT) est traité par un décodeur d'interruption (ITDEC) pour envoyer le microprocesseur dans un sous-programme (ITADR) de traitement des violations d'adresse.

**Fig. 1**

**Fig. 2**

**Fig. 3**

EP 1 168 184 A1

**Fig. 4**

**Fig. 5**

**Office européen des brevets**

**RAPPORT DE RECHERCHE EUROPEENNE**

Numéro de la demande

EP 01 11 2777

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 452 431 A (BOURNAS JEAN-PIERRE) 19 septembre 1995 (1995-09-19) * abrégé * * colonne 2, ligne 44 - ligne 68 * * colonne 3, ligne 1 - ligne 22 * * colonne 4, ligne 59 - colonne 5, ligne 3 * * colonne 7, ligne 29 - ligne 41 * * colonne 11, ligne 25 - ligne 51 * * figure 1 * | 1-3,9,10 | G06F12/14 |
| A | US 3 803 559 A (BANDOO T ET AL) 9 avril 1974 (1974-04-09) * colonne 1, ligne 11 - ligne 17 * * colonne 2, ligne 14 - ligne 41 * * colonne 2, ligne 61 - colonne 3, ligne 8 * * colonne 5, ligne 36 - ligne 48 * * colonne 6, ligne 3 - ligne 13 * * figures 1,3 * | 1-3,9,10 | |
| A | US 5 457 789 A (SHENG MING-CHENG ET AL) 10 octobre 1995 (1995-10-10) * abrégé * * colonne 5, ligne 19 - ligne 47 * * figures 3,5 * | 1,4,5,8 | **DOMAINES TECHNIQUES RECHERCHES (Int.Cl.7)** G06F G07F |
| A | US 4 442 484 A (CHILDS JR ROBERT H E ET AL) 10 avril 1984 (1984-04-10) * abrégé * * colonne 1, ligne 30 - ligne 49 * * colonne 3, ligne 20 - ligne 40 * | 1 | |

Le présent rapport a été établi pour toutes les revendications

| Lieu de la recherche | Date d'achèvement de la recherche | Examinateur |
|---|---|---|
| LA HAYE | 19 octobre 2001 | Arbutina, L |

## ANNEXE AU RAPPORT DE RECHERCHE EUROPEENNE
## RELATIF A LA DEMANDE DE BREVET EUROPEEN NO.

EP 01 11 2777

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-10-2001

| Document brevet cité au rapport de recherche | | Date de publication | Membre(s) de la famille de brevet(s) | | Date de publication |
|---|---|---|---|---|---|
| US 5452431 | A | 19-09-1995 | FR<br>DE<br>DE<br>EP<br>JP | 2683357 A1<br>69223920 D1<br>69223920 T2<br>0540095 A1<br>5217035 A | 07-05-1993<br>12-02-1998<br>18-06-1998<br>05-05-1993<br>27-08-1993 |
| US 3803559 | A | 09-04-1974 | JP<br>JP | 48029327 A<br>51040772 B | 18-04-1973<br>05-11-1976 |
| US 5457789 | A | 10-10-1995 | EP<br>JP | 0432359 A2<br>3256183 A | 19-06-1991<br>14-11-1991 |
| US 4442484 | A | 10-04-1984 | AUCUN | | |

EPO FORM P0460

Pour tout renseignement concernant cette annexe : voir Journal Officiel de l'Office européen des brevets, No. 12/82